# EUROPÄISCHE PATENTSCHRIFT

(11) **EP 0 704 467 B1**
(45) Veröffentlichungstag und Bekanntmachung des Hinweises auf die Patenterteilung: **21.07.1999**
(21) Anmeldenummer: 95114942.6
(22) Anmeldetag: 22.09.1995
(51) Int. Cl.: C08G 12/42

(54) **Veretherte Methylolgruppen tragende Aminotriazinharze**
Aminotriazine resins with etherified methylol groups
Résines aminotriazines à groupes méthylol éthérifiés

(30) Priorität: 30.09.1994 DE 4434988
(43) Veröffentlichungstag der Anmeldung: 03.04.1996
(73) Patentinhaber: BASF AKTIENGESELLSCHAFT, 67056 Ludwigshafen (DE)
(72) Erfinder: Busse, Gerd, D-67112 Mutterstadt (DE); Kummer, Matthias, Dr., D-67273 Weisenheim (DE)

(56) Entgegenhaltungen:
- DE-B- 1 081 660
- US-A- 2 794 008
- US-A- 3 647 755
- PATENT ABSTRACTS OF JAPAN vol. 011, no. 089 (C-411), 19.März 1987 & JP 61 243816 A (MITSUI TOATSU CHEM INC), 30.Oktober 1986,

## Beschreibung

Die Erfindung betrifft veretherte Methylolgruppen tragende Aminotriazinharze mit einem gewichtsmittleren Molekulargewicht (M_{w}) von 6000 bis 10000 aus Aminotriazinen und 0,6 bis 1,2 mol Formaldehyd pro Aminogruppe im Aminotriazin, wobei 60 bis 80 mol-% der Methylolgruppen mit C₄- bis C₆-Monoalkoholen verethert sind.

Weiterhin betrifft die Erfindung Verfahren zu deren Herstellung, deren Verwendung als Rohstoff für Beschichtungs-, Textil- oder Papierhilfsmittel sowie mit den Aminotriazinharzen beschichtete Gegenstände.

Veretherte Methylolgruppen tragende Aminotriazinharze, z.B. mit niederen Alkoholen veretherte Methylolverbindungen des Melamins, sind allgemein bekannt und beispielsweise in "Methoden der Organischen Chemie (Houben-Weyl)" Hrsg.: Eugen Müller, Band XIV/2, S. 361 bis 370, 4. Auflage, 1963, Georg Thieme Verlag Stuttgart beschrieben.

Die veretherte Methylolgruppen tragenden Aminotriazinharze werden als Textil- oder Papierhilfsmittel und vor allem als Rohstoff für Beschichtungsmittel, z.B. als Bindemittel in Lacken und Farben eingesetzt.

In der DE-A 39 05 913 sind Lösungen beschrieben, die mit Butanol veretherte Methylolgruppen tragende Aminotriazinharze enthalten. Über deren M_{w} ist nichts ausgesagt.

Aus der DP 218 764 A3 sind partiell mit n-Butanol veretherte Melamin-Formaldehyd-Kondensate bekannt, die ein zahlenmittleres Molgewicht von 1300 aufweisen.

An die veretherte Methylolgruppen tragenden Aminotriazinharze, die als Lackrohstoffe eingesetzt werden, werden vielfältige Anforderungen hinsichtlich der Verarbeitungs- und Gebrauchseigenschaften der damit hergestellten Lacküberzüge gestellt.

Die Lackrohstoffe sollen Verarbeitungseigenschaften wie
- eine gute Löslichkeit in verschiedenen Lösungsmitteln
- in gelöster Form eine niedrige Viskosität bei gleichzeitig hohem Feststoffgehalt und
- eine gute Lagerstabilität, d.h. keine Tendenz zur Selbstvernetzung aufweisen.

Außerdem sollen sich die Lackrohstoffe, gegebenenfalls in Kombination mit weiteren Lackharzen, z.B. Alkyd-, Polyester- oder Acrylatharzen sowohl nach dem "Einbrennverfahren" als auch durch "Säurehärtung" zu Lacküberzügen mit guten Gebrauchseigenschaften aushärten lassen.

Beim Einbrennverfahren werden die auf das Substrat aufgetragenen Lackrohstoffe durch kurzzeitiges Erhitzen auf 100 bis 180°C ausgehärtet.

Bei der Säurehärtung werden die Lackrohstoffe kurz vor der Verarbeitung mit einer Säure vermischt und nach dem Aufbringen auf das Substrat bei Temperaturen von 30 bis 60°C ausgehärtet.

Unter den Gebrauchseigenschaften sind besonders eine hohe Härte, Elastizität, Lösungsmittelfestigkeit, Wetterbeständigkeit und eine gute Haftung der Überzüge auf dem Substrat von Bedeutung.

Die bisher bekannten Lackrohstoffe lassen insofern noch zu wünschen übrig als sie entweder nur durch Einbrennen oder nur durch Säurehärtung zu Lacküberzügen mit den genannten guten Gebrauchseigenschaften verarbeitbar sind. Lackrohstoffe, die die gewünschten sonstigen Verarbeitungseigenschaften aufweisen und sich mit den beiden üblichen Verfahren zu Lacküberzügen mit den gewünschten Gebrauchseigenschaften aushärten lassen, sind bisher nicht bekannt geworden.

Der Erfindung lag daher die Aufgabe zugrunde, diesen Mängeln abzuhelfen.

Demgemäß wurden die eingangs definierten veretherte Methylolgruppen tragende Aminotriazinharze gefunden.

Die erfindungsgemäßen veretherte Methylolgruppen tragenden Aminotriazinharze aus Aminotriazinen und 0,6 bis 1,2 mol, bevorzugt 0,7 bis 0,9 mol Formaldehyd pro Mol Aminogruppen im Aminotriazin, wobei 60 bis 80, bevorzugt 65 bis 75 mol-% der Methylolgruppen mit C₄- bis C₆-Monoalkoholen verethert sind, weisen ein gewichtsmittleres Molekulargewicht (M_{w}) von 6000 bis 10000, bevorzugt von 8000 bis 9000 und besonders bevorzugt von 7500 bis 8500 auf.

Der Polymolekularitätsindex, (vgl. "Grundriß der Makromolekularen Chemie", Band III, S. 106ff, Bruno Vollmert, E. Vollmert Verlag, Karlsruhe 1988), dem Quotienten aus dem zahlenmittleren und dem gewichtsmittleren Molekulargewicht Mₙ und M_{w} der Aminotriazinharze, stellt ein Maß für ihre Molekulargewichtsverteilung dar und liegt im allgemeinen bei 3,7 bis 4,5, bevorzugt bei 4,1 bis 4,3.

Als Aminotriazine, aus denen die erfindungsgemäßen Aminotriazinharze hergestellt sind, kommen neben den Monoaminotriazinen insbesondere Di- und Triaminotriazine in Betracht, wobei die 1,3,5-Triazine, z.B. Melamin, sowie Guanamine wie Benzoguanamin und Acetoguanamin bevorzugt sind. Bisguanamine wie Adipo-, Glutaro- oder Methylolglutarobisguanamin sowie Verbindungen, welche mehrere, z.B. kondensierte Aminotriazinkerne enthalten, sind ebenfalls geeignet.

Gemische dieser Aminotriazine können ebenfalls eingesetzt werden, bevorzugt sind Gemische, enthaltend
a) 70 bis 100 , bevorzugt 80 bis 90 mol-% Melamin und
b) 0 bis 30, bevorzugt 10 bis 20 mol-%, jeweils bezogen auf die Summe aus a) und b), Guanaminen.

Als Alkohole, mit denen die Methylolgruppen der Aminotriazinharze verethert sind, kommen C₄- bis C₆-Monoalkohole, z.B. n- und iso-Butanol, Pentanole wie 1-Pentanol, 2-Pentanol und 2-Methyl-butanol, Hexanole wie 1-Hexanol, 2-Hexanol, 3-Hexanol, Methylpentole, Cyclohexanol sowie Mischungen dieser Alkohole in Betracht.

Die Bildung der definitionsgemäßen Aminotriazinharze mit den gewünschten geringen Polymolekularitätsindizes ist besonders begünstigt, wenn
A) Aminotriazin
B) 0,6 bis 1,2, bevorzugt 0,7 bis 0,9 mol Formaldehyd pro Mol Aminogruppen im Aminotriazin und
C) 2,6 bis 5,2, bevorzugt 3,0 bis 4,0 und eines C₄- bis C₆-Monoalkohols pro Mol Formaldehyd
bei einer Reaktionstemperatur von 90 bis 130, bevorzugt von 95 bis 125 °C und einer mittleren Verweilzeit von 60 bis 180 und bevorzugt 80 bis 120 min und einem pH-Wert von 4,5 bis 5,5, bevorzugt von 4,7 bis 5,3 umgesetzt werden.

Die Ausgangsverbindungen A), B) und C) werden bevorzugt in reiner Form eingesetzt oder im Falle des Formaldehyds als Paraformaldehyd oder als wäßrige Lösung mit einem Formaldehydgehalt von 30 bis 40 Gew.-%.

Die Umsetzung wird üblicherweise in Gegenwart von Lösungsmitteln durchgeführt, wobei als Lösungsmittel beispielsweise ein Überschuß an dem Alkohol, mit dem die Methylogruppen verethert werden (Komponente C), in Betracht kommt. Prinzipiell ist auch der Zusatz anderer Lösungsmittel wie sonstiger inerter Lösungsmittel, vor allem solcher mit einem Siedepunkt bei Normaldruck von 100 bis zu 180°C möglich.

Derartige Lösungsmittel sind beispielsweise aliphatische und cycloaliphatische Ether und aromatische und araliphatische Kohlenwasserstoffe wie Benzol und Toluol sowie halogenierte Kohlenwasserstoffe wie Chlorbenzol oder Ethan- oder Methanderivate, bei denen ein oder mehrere Wasserstoffatome durch Halogenatome, z.B. Fluor und/oder Chlor, ersetzt sind.

Die Einstellung des gewünschten pH-Wertes erfolgt vorzugsweise durch Zusatz von organischen und/oder anorganischen Säuren mit einer Säurekonstante pkₐ kleiner als 4 also beispielsweise Phosphorsäure, Salzsäure, Salpetersäure oder Schwefelsäure sowie Oxalsäure, Ameisensäure, Trichloressigsäure, Citronensäure, Maleinsäure, p-Toluolsulfonsäure und Dodecylbenzolsulfonsäure.

Die Umsetzung wird bevorzugt in Gegenwart von 0,05 bis 0,3, bevorzugt von 0,1 bis 0,2 mol-%, bezogen auf die Molmenge der Aminotriazine, eines als Katalysator dienenden Salzes, wobei die Anionen sich von einer anorganischen und/oder organischen Säure mit einer Säurekonstante pkₐ kleiner als 4 ableiten und die Kationen sich von einer anorganischen und/oder organischen Base mit einer Basenkonstante pk_{b} kleiner als -4 ableiten, durchgeführt.

Die Anionen des Salzes leiten sich bevorzugt von den Säuren ab, die auch zur Einstellung des gewünschten pH-Wertes dienen.

Die Kationen des Salzes leiten sich bevorzugt von Basen wie Alkali- oder Erdalkalihydroxiden, z.B. Natrium oder Kaliumhydroxid ab.

Die Umsetzung der Komponenten (A), (B) und (C) erfolgt bevorzugt in einem Reaktionsschritt.

Praktischerweise geht man dabei so vor, daß man bei Raumtemperatur eine wäßrige Reaktionsmischung mit einem Siedepunkt im Bereich der angegebenen Reaktionstemperatur, bestehend aus den Komponenten (A), (B), (C), Wasser und dem Katalysator herstellt und diese bis zum Sieden erwärmt. Die Menge an Wasser und Komponente (C) wird günstigerweise so gewählt, daß bei der Siedetemperatur die Mischung eine Lösung bildet. Während des Erwärmens wird der pH-Wert fortlaufend kontrolliert und falls erforderlich durch Zugabe von einer Säure oder Base, bevorzugt einer solchen, von der sich der Katalysator ableitet, auf den Zielwert eingestellt. Sobald nach einer entsprechenden Verweilzeit sich das gewünschte M_{w} eingestellt hat, wird die Umsetzung durch Abkühlen auf Raumtemperatur beendet. Gegebenenfalls kann der Fachmann durch einfache Vorversuche die geeignete Verweilzeit feststellen.

Im allgemeinen werden veretherte Methylolgruppen tragende Aminotriazinharze, die weitgehend frei von Wasser und sonstigem bei der Herstellung verwendeten flüchtigen Bestandteilen sind oder konzentrierte Lösungen mit einem Feststoffgehalt von bevorzugt 55 bis 60 Gew.-% aufweisen, gewünscht.

Die Angaben zum Feststoffgehalt beziehen sich auf eine Meßmethode, die sich an DIN 53216 anlehnt und bei der eine Mischung aus 2 g Butanol und 2 g Aminotriazinharz mit einem Trockenblech (Durchmesser 8 cm) 2h bei 125°C getrocknet und nach Abkühlung auf Raumtemperatur zurückgewogen werden.

Die konzentrierten Lösungen werden bevorzugt auf eine Viskosität von 1500 bis 3000, besonders bevorzugt von 1800 bis 2600 mPa·s (gemessen bei 23°C und einem Schergefälle von 82,6 s⁻¹) eingestellt.

Zur Erhöhung des Feststoffgehalts wird die Reaktionsmischung vorzugsweise bereits während ihrer Umsetzung destillativ vom Wasser-Alkohol-Gemisch sowie eventuell sonstigen in der Reaktionsmischung vorhandenen flüchtigen Bestandteilen befreit.

Bevorzugt wird die Destillationsgeschwindigkeit so gewählt, daß die für die Umsetzung benötigte Verweilzeit und die für die Destillation benötigte Zeit gleich lang sind, so daß bei Beendigung der synchron mit der Destillation durchgeführten Umsetzung das erfindungsgemäße Aminotriazin den gewünschten Feststoffgehalt aufweist.

Die Destillation wird bevorzugt bei Normaldruck durchgeführt, sofern die Siedetemperatur der Reaktionsmischung, bezogen auf Normaldruck, in dem für die Reaktionstemperatur definierten Bereich liegt. Bei einer höheren Siedetemperatur empfiehlt es sich, den Druck entsprechend zu reduzieren.

Falls nach der für die Umsetzung erforderlichen Verweilzeit der Feststoffgehalt des Umsetzungsproduktes, dem veretherte Methylolgruppen tragenden Aminotriazinharz, noch unter dem gewünschten Wert liegt, so sollte die weitere destillative Entfernung der Lösungsmittel und sonstigen flüchtigen Bestandteile möglichst so erfolgen, daß die Reaktionsmischung möglichst wenig thermisch belastet wird, um eine Weiterkondensation der Reaktionsmischung zu Produkten mit einem höheren als dem definitionsgemäßen M_{w} zu vermeiden.

Da die für die Destillation und die für die Umsetzung benötigte Zeit üblicherweise so gewählt wird, daß beide Zeiten in etwa gleich lang sind, erübrigt es sich im allgemeinen, das als Lösungsmittel in die Reaktionsmischung eingebrachte und das bei der Veretherung gebildete Reaktionswasser wie bisher üblich "auszukreisen", d.h. durch azeotrope Destillation mit Hilfe eines Lösungsmittels zu entfernen und das Lösungsmittel kontinuierlich in die Reaktionsmischung zurückzuführen.

Die erfindungsgemäßen Aminotriazinharze werden im allgemeinen für die Herstellung von Überzügen und bei der Textil- oder Papierherstellung eingesetzt.

Entsprechend dem Hauptanwendungsgebiet der erfindungsgemäßen Aminotriazinharze für die Herstellung von Überzügen, insbesondere von Lacken, verarbeitet man sie wie üblich, gewünschtenfalls zusammen mit Hilfs- und Zusatzstoffen wie Lösungsmitteln, Vernetzungskatalysatoren, Stabilisatoren, Mattierungs- und Verlaufshilfsmitteln sowie weiteren Lackharzen zu Beschichtungsmitteln.

Die Beschichtungsmittel enthalten im allgemeinen 30 bis 60, bevorzugt 40 bis 50 Gew.-%, bezogen auf den Feststoff, an dem Aminotriazinharz.

Als Lösungsmittel kommen dieselben in Betracht, die auch bei der Herstellung der erfindungsgemäßen Aminotriazinharzen aus den Komponenten (A) bis (C) eingesetzt werden können. Der Lösungsmittelgehalt der Beschichtungsmittel liegt bevorzugt bei 20 bis 40 Gew.-%.

Die Beschichtungsmittel enthalten überlicherweise neben dem Aminotriazinharz ein weiteres Lackharz, welches funktionelle Gruppen mit aktiven Wasserstoffatomen, (d.h. solche, die in einer Zerewitinoff-Reaktion reagieren), beispielsweise alkoholische OH-Gruppen, Carboxylgruppen, primäre oder sekundäre Aminogruppen, Amid-, Urethan- und Harnstoffgruppen, mit denen die Aminotriazinharze vernetzbar sind, trägt.

Lackharze mit derartigen funktionellen Gruppen sind beispielsweise Copolymerisate aus Monomeren mit funktionellen Gruppen wie Acrylsäure, Methacrylsäure, Hydroxy-(C₂- bis C₆-alkyl)-acrylaten, z.B. Hydroxyethylacrylat und/oder Hydroxy-(C₂- bis C₆-alkyl)-methacrylaten sowie sonstigen radikalisch polymerisierbaren Monomeren wie den C₁- bis C₆-Alkylestern der Acrylsäure oder Methacrylsäure sowie Styrol oder Styrolderivaten, z.B. α-Methylstyrol.

Weiterhin kommen als Lackharze, Alkyd-, Epoxid- und Polyesterharze in Betracht.

Die Beschichtungsmittel enthalten ein Aminotriazinharz und ein weiteres Lackharz vorzugsweise in einem Gewichtsverhältnis von 0,1 : 1 bis 1 : 1, bevorzugt von 0,25 : 1 bis 1 : 1 und vor allem von 0,5 : 1 bis 1 : 1.

Die Beschichtungsmittel können durch die üblichen bekannten Auftragsverfahren, also z.B. durch Spritzen, Streichen, Tauchen oder Rakeln, auf das Substrat aufgebracht werden.

Zur Aushärtung der Beschichtungsmittel sind im allgemeinen Temperaturen von ca. 100 bis 180, bevorzugt von 120 bis 140 °C erforderlich (Einbrennhärtung).

Enthalten die Beschichtungsmittel saure Vernetzungskatalysatoren, so reichen oft Temperatur von ca. 30 bis 60 und meistens von 40 bis 50°C für eine Aushärtung aus (Säurehärtung).

Als saure Vernetzungskatalysatoren eignen sich starke Säuren wie Sulfonsäuren, z.B. p-Toluolsulfonsäure, Naphthalinsulfonsäure sowie Mineralsäuren. Sie sind in den Beschichtungsmitteln üblicherweise in Mengen von 1 bis 5 Gew.-%, bezogen auf die Menge an Aminotriazinharz, enthalten.

Die Einbrennzeiten liegen bei 10 bis 120, bevorzugt bei 30 bis 60 Minuten.

Die erfindungsgemäßen Aminotriazinharze und die aus ihnen hergestellten Beschichtungsmittel eignen sich zur Beschichtung unterschiedlicher Substrat, z.B. Glas, Kunststoff, Metall oder Holz.

Beschichtungsmittel, die die erfindungsgemäßen Aminotriazinharze enthalten, verhalten sich bei der Verarbeitung unproblematisch und lassen sich sowohl durch das Einbrennverfahren als auch durch Säurehärtung zu Überzügen mit guten Gebrauchseigenschaften, insbesondere was die Widerstandstätigkeit gegen mechanische Beanspruchung betrifft, aushärten.

Die in den Beispielen gemachten Angaben zum Polymolekularitätsindex sowie zu Mₙ und M_{w} beziehen sich auf gelpermeationschromatographische Messungen nach DIN 55672, Teil 1.

Das Trennsystem bestand aus 4 hintereinandergeschalteten Säulen einer Länge von jeweils 300 mm und einem Durchmesser von 7,8 mm, wobei die Säulen mit Ultra-Styragel der Fa. Waters gefüllt waren und das Füllmaterial der ersten Säule einen Porendurchmesser von 10 µm, das der zweiten einen Porendurchmesser von ebenfalls 1 µm, das der dritten einen Porendurchmesser von 50 µm und das der vierten einen Porendurchmesser von 10 µm aufwies. Die theoretische Bodenzahl betrug insgesamt 25 000.

Die Messung wurde mit Proben mit einem Volumen von 200 µm und einer Konzentration am Aminotriazinharz von 1,00 Gew.-% bei einer Temperatur von 30°C durchgeführt.

### Beispiele

### Herstellungsbeispiele

### Beispiel 1 (erfindungsgemäß)

Eine Mischung aus 670 g (9,0 mol) Butanol, 160 g einer 40 gew.-%igen Formaldehyd-Lösung (entspricht 2,1 mol Formaldehyd), 90 g (0,71 mol) Melamin, 0,1 g einer 25 gew.-%igen Natronlauge und 0,3 g einer 30 gew.-%igen ethanolischen Phosphorsäurelösung wurde bei Normaldruck bis zum Siedepunkt erhitzt und wies, nachdem sich eine klare Lösung gebildet hatte, einen pH-Wert von 5,2 auf. In den folgenden 105 min wurden aus der Lösung 550 g eines Gemisches abdestilliert, das 115 g Wasser enthielt, wobei die Siedetemperatur auf 127°C anstieg. Nach Abkühlen auf 85°C, Versetzen mit 40 g Xylol und 30 g Butanol erhielt man 378 g einer Aminotriazinharz-Lösung.

### Beispiel 2 (zum Vergleich)

Eine Mischung nach Beispiel 1, die statt 0,3 g 0,7 g einer 30 gew.-%igen ethanolischen Phosphorsäurelösung enthielt, wies, nachdem sich beim Erwärmen auf Siedetemperatur eine saure Lösung gebildet hatte, einen pH-Wert von 4,5 auf. In den folgenden 270 min wurde aus der Mischung ein azeotropes Wasser/Butanol-Gemisch abdestilliert, wobei die organische Phase des kondensierten Gemisches kontinuierlich in die Lösung zurückgeführt wurde. Nachdem so 131 g Wasser abgetrennt worden waren, betrug die Siedetemperatur 105°C. Anschließend wurde aus der Lösung innerhalb von 120 min 457 g Lösungsmittel abdestilliert, wobei die Siedetemperatur auf 126°C anstieg. Nach Abkühlen und Verdünnen mit 40 g Xylol und 44 g Butanol erhielt man 386 Teile einer Aminotriazinharz-Lösung.

### Beispiel 3 (zum Vergleich)

Eine Mischung nach Beispiel 1, die statt 0,3 g 0,2 g einer 30 gew.-%igen ethanolischen Phosphorsäurelösung enthielt, wies nach Lösung des Melamins einen pH-Wert von 5,2 auf. Die Temperatur stieg hierbei bis auf 96°C. Nach 30-minütigem Rühren bei der angegebenen Temperatur wurde unter vermindertem Druck, bei 560 mbar und 87°C beginnend ein Gemisch aus 565 Teilen Butanol und Wasser abdestilliert, wobei eine Endtemperatur von 80°C bei einem Druck von 180 mbar erreicht wurde. Nach Zugabe von 30 g Xylol und 30 g Butanol wurden 396 Teile einer schwach trüben Aminotriazinharzlösung erhalten, die nach Filtration über Cellulose-Filterplatten (K 800, Fa. Seitz) eine transparente Lösung ergab.

| Eigenschaften der Aminotriazinharz-Lösungen | | | |
|---|---|---|---|
| | Bsp. 1 | Bsp. 2 (V) | Bsp. 3 (V) |
| Feststoffgehalt [Gew.-%] | 57,3 | 58,3 | 52,8 |
| Viskosität [mPa·s] | 2290 | 2360 | 1650 |
| M_{w} | 8090 | 16530 | 2870 |

### Anwendungsbeispiele

### 1. Säurehärtung

Zur Herstellung eines Beschichtungsmittels wurden je 22 g eines Aminotriazinharzes nach Beispiel 1 bzw. Beispiel 2 und 3 mit 50 g einer Acrylharz-Lösung bestehend aus 60 Gew.-% ® Solvesso 100 (Aromatengemisch mit einem Siedepunkt von ca. 100°C) und 40 Gew.-% eines Polyacrylats, aufgebaut aus 50,5 Gew.-% Butylacrylat, 15,0 Gew.-% Styrol, 18,0 Gew.-% Methylmethacrylat, 15,0 Gew.-% Hydroxyethylacrylat und 1,5 Gew.-% Acrylsäure sowie 5 g einer 0,5 gew.%igen Lösung von p-Toluolsulfonsäure in Methanol vermischt.

Das Beschichtungsmittel wurde in einer Schichtdicke von 100 µm auf eine Glasplatte aufgetragen und 45 min auf 80°C erhitzt.

### 2. Einbrennverfahren

Beschichtungsmittel, die die gleiche Zusammensetzung wie die, die unter den Bedingungen der Säurehärtung verarbeitet wurden, jedoch keine p-Toluolsulfonsäure enthielten, wurden in einer Schichtdicke von 150 µm auf eine Glasplatte aufgetragen und 30 min auf 130°C erhitzt.

Die Qualität der Beschichtungen wurde durch die Messung des mechanischen Dämpfungsverhaltens mit dem Pendelgerät nach König (DIN 53157) ermittelt. Je höher die Zahl der gemessenen Pendelschwingungen (PS) ist, desto höher ist die Qualität der Beschichtung.

| | Bsp. 1 | Bsp. 2 (V) | Bsp. 3 (V) |
|---|---|---|---|
| PS-Säurehärtung | 99 | 72 | 64 |
| PS-Einbrennverfahren | 130 | 97 | 89 |

## Patentansprüche

1. Veretherte Methylolgruppen tragende Aminotriazinharze mit einem gewichtsmittleren Molekulargewicht (M_{w}) von 6000 bis 10000 aus Aminotriazinen und 0,6 bis 1,2 mol Formaldehyd pro Mol Aminogruppen im Aminotriazin, wobei 60 bis 80 mol-% der Methylolgruppen mit C₄- bis C₆-Monoalkoholen verethert sind.

2. Veretherte Methylolgruppen tragende Aminotriazinharze nach Anspruch 1 mit einem Polymolekularitätsindex von 3,7 bis 4,5.

3. Veretherte Methylolgruppen tragende Aminotriazinharze nach Anspruch 1 oder 2, wobei es sich bei den Aminotriazinen um ein Gemisch, enthaltend
a) 70 bis 100 mol-% Melamin und
b) 0 bis 30 mol-%, jeweils bezogen auf die Summe aus a) und b), Guanamine handelt.

4. Veretherte Methylolgruppen tragende Aminotriazinharze nach den Ansprüchen 1 bis 3, wobei die veretherten Methylolgruppen mit n- und/oder iso-Butanol verethert sind.

5. Veretherte Methylolgruppen tragende Aminotriazinharze nach den Ansprüchen 1 bis 4, erhältlich durch Umsetzung von
A) Aminotriazinen mit
B) 0,6 bis 1,2 mol Formaldehyd pro Mol Aminogruppen im Aminotriazin und
C) 2,6 bis 5,2 mol eines C₄- bis C₆-Monoalkohols pro Mol Formaldehyd
bei einem pH-Wert von 4,5 bis 5,5, einer Reaktionstemperatur von 90 bis 130 °C und einer mittleren Verweilzeit von 60 bis 180 min.

6. Veretherte Methylolgruppen tragende Aminotriazinharze nach Anspruch 5, wobei man die Umsetzung in Gegenwart von 0,05 bis 0,3 mol-%, bezogen auf die Molmenge der Aminotriazine, eines Salzes aus einer Säure mit einer Säurekonstante pKₐ kleiner als 4 und einer Base mit einer Basenkonstante pK_{b} kleiner als -4 durchführt.

7. Verfahren zur Herstellung von veretherte Methylolgruppen tragenden Aminotriazinharzen gemäß Anspruch 5 oder 6, dadurch gekennzeichnet, daß man die Komponenten A), B) und C) bei einem pH-Wert von 4,5 bis 5,5, einer Reaktionstemperatur von 90 bis 130 °C und einer mittleren Verweilzeit von 80 bis 120 min umsetzt.

8. Verwendung der veretherte Methylolgruppen tragenden Aminotriazinharze gemäß den Ansprüchen 1 bis 7 für die Herstellung von Überzügen oder als Hilfsmittel bei der Textil- oder Papierherstellung.

9. Beschichtungsmittel, enthaltend ein Aminotriazinharz nach den Ansprüchen 1 bis 7 und ein weiteres Lackharz mit aktiven Wasserstoffatomen in einem Gewichtsverhältnis von 0,1 : 1 bis 1 : 1.

10. Gegenstände, die mit den veretherte Methylolgruppen tragenden Aminotriazinharzen gemäß den Ansprüchen 1 bis 7 oder den Beschichtungsmitteln gemäß Anspruch 9 beschichtet sind.

## Claims

1. An aminotriazine resin which carries etherified methylol groups and has a weight-average molecular weight (M_{w}) of from 6000 to 10,000, formed from aminotriazines and from 0.6 to 1.2 mol of formaldehyde per mole of amino groups in the aminotriazine, where from 60 to 80 mol% of the methylol groups are etherified with C₄ to C₆ monoalcohols.

2. An aminotriazine resin carrying etherified methylol groups, as claimed in claim 1 and having a polydispersity index of from 3.7 to 4.5.

3. An aminotriazine resin carrying etherified methylol groups, as claimed in claim 1 or 2, where the aminotriazines comprise a mixture comprising
a) from 70 to 100 mol% of melamine and
b) from 0 to 30 mol% of guanamines, based in each case on the sum of a) and b).

4. An aminotriazine resin carrying etherified methylol groups, as claimed in claims 1 to 3, where the etherified methylol groups are etherified with n-butanol and/or isobutanol.

5. An aminotriazine resin carrying etherified methylol groups, as claimed in claims 1 to 4 and obtainable by reacting
A) aminotriazines with
B) from 0.6 to 1.2 mol of formaldehyde per mole of amino groups in the aminotriazine and
C) from 2.6 to 5.2 mol of a C₄ to C₆ monoalcohol per mole of formaldehyde
at a pH from 4.5 to 5.5, at a temperature from 90 to 130°C and with a mean residence time from 60 to 180 minutes.

6. An aminotriazine resin carrying etherified methylol groups, as claimed in claim 5, where the reaction is conducted in the presence of from 0.05 to 0.3 mol%, based on the molar amount of the aminotriazine, of a salt of an acid having an acid constant pKₐ of less than 4 and a base having a base constant pK_{b} of less than -4.

7. A process for preparing an aminotriazine resin carrying etherified methylol groups, as claimed in claim 5 or 6, which comprises reacting components A), B) and C) at a pH of from 4.5 to 5.5, at a temperature from 90 to 130°C and with a mean residence time from 80 to 120 minutes.

8. The use of an aminotriazine resin carrying etherified methylol groups, as claimed in claims 1 to 7, for the production of coatings or as an auxiliary in the production of textiles or paper.

9. A coating composition comprising an aminotriazine resin as claimed in claims 1 to 7 and a further film-forming resin having active hydrogen atoms, in a weight ratio of from 0.1 : 1 to 1 : 1.

10. An article coated with an aminotriazine resin carrying etherified methylol groups, as claimed in claims 1 to 7, or with a coating composition as claimed in claim 9.

## Revendications

1. Résine aminotriazine portant des groupements méthylol éthérifiés ayant une masse moléculaire moyenne en poids (M_{w}) de 6 000 à 10 000 formée à partir d'aminotriazines et de 0,6-1,2 mole de formaldéhyde par mole de groupements amino dans l'aminotriazine, où 60-80% en moles des groupements méthylol sont éthérifiés avec des monoalcools en C₄-C₆.

2. Résine aminotriazine portant des groupements méthylol éthérifiés selon la revendication 1, ayant un indice de polymolécularité de 3,7 à 4,5.

3. Résine aminotriazine portant des groupements méthylol éthérifiés selon la revendication 1 ou 2, où les aminotriazines sont constituées d'un mélange contenant
a) 70-100% en moles de mélamine et
b) 0-30% en moles de guanamine, à chaque fois par rapport à la somme de a) et b).

4. Résine aminotriazine portant des groupements méthylol éthérifiés selon l'une quelconque des revendications 1 à 3, où les groupements méthylol éthérifiés sont éthérifiés avec du n- et/ou de l'iso-butanol.

5. Résine aminotriazine portant des groupements méthylol éthérifiés selon l'une quelconque des revendications 1 à 4, pouvant être obtenue par la réaction
A) d'aminotriazines avec
B) 0,6-1,2 mole de formaldéhyde par mole de groupements amino dans l'aminotriazine et
C) 2,6-5,2 moles d'un monoalcool en C₄-C₆ par mole de formaldéhyde
à un pH de 4,5-5,5, une température réactionnelle de 90-130°C et pendant un temps de séjour moyen de 60-180 min.

6. Résine aminotriazine portant des groupements méthylol éthérifiés selon la revendication 5, où l'on mène la réaction en présence de 0,05-0,3% en mole, par rapport à la quantité molaire d'aminotriazine, d'un sel formé à partir d'un acide ayant une constante d'acidité pKa inférieure à 4 et d'une base ayant une constante de basicité pKb inférieure à -4.

7. Procédé de préparation de résines aminotriazine portant des groupements méthylol éthérifiés selon la revendication 5 ou 6, caractérisé en ce que l'on fait réagir les composants A), B) et C) à un pH de 4,5-5,5, à une température réactionnelle de 90-130°C et pendant un temps de séjour moyen de 80-120 min.

8. Utilisation de résines aminotriazine portant des groupements méthylol éthérifés selon l'une quelconque des revendications 1 à 7 pour la fabrication de revêtements ou en tant qu'adjuvant pour la fabrication de textiles ou de papier.

9. Agent de revêtement contenant une résine aminotriazine selon l'une quelconque des revendications 1 à 7 et une autre résine-laque ayant des atomes d'hydrogènes actifs, dans un rapport en poids de 0,1:1 à 1:1.

10. Objets revêtus avec les résines aminotriazine portant des groupements méthylol éthérifiés selon l'une quelconque des revendications 1 à 7 ou avec l'agent de revêtement selon la revendication 9.
